# EUROPÄISCHE PATENTSCHRIFT

(11) **EP 2 962 034 B1**
(45) Veröffentlichungstag und Bekanntmachung des Hinweises auf die Patenterteilung: **29.03.2017**
(21) Anmeldenummer: 14700736.3
(22) Anmeldetag: 17.01.2014
(51) Int. Cl.: F17C 7/00, F17C 13/02, G01F 22/02, G01F 23/00, G01F 23/14

(54) **VERFAHREN UND VORRICHTUNG ZUR ERMITTLUNG DER FÜLLMASSE EINES KRYOGEN GESPEICHERTEN GASES IN EINEM BEHÄLTER**
METHOD AND DEVICE FOR DETERMINING THE FILLING MASS OF A CRYOGENICALLY STORED GAS IN A CONTAINER
PROCÉDÉ ET DISPOSITIF PERMETTANT DE DÉTERMINER LA MASSE DE REMPLISSAGE D'UN GAZ STOCKÉ DE FAÇON CRYOGÉNIQUE DANS UN CONTENANT

(30) Priorität: 26.02.2013 DE 102013203187
(43) Veröffentlichungstag der Anmeldung: 06.01.2016
(73) Patentinhaber: Bayerische Motoren Werke Aktiengesellschaft, 80809 München (DE)
(72) Erfinder: KAMPITSCH, Markus, 85630 Neukeferloh (DE); SCHOTT, Stefan, 82140 Olching (DE)
(86) Internationale Anmeldenummer: PCT/EP2014/050920
(87) Internationale Veröffentlichungsnummer: WO 2014/131547

(56) Entgegenhaltungen:
- DE-A1-102006 025 654
- FR-A1- 2 922 992
- US-A1- 2005 247 123

## Beschreibung

Die Erfindung betrifft ein Verfahren zur Ermittlung der Füllmassse eines kryogen gespeicherten Gases in einem Behälter, der ein Medium enthält, das sich zu einem Teil in der flüssigen Phase und zum anderen Teil in der gasförmigen Phase befindet, sowie eine Vorrichtung zur Durchführung des Verfahrens und eine Anwendung in einem Kraftfahrzeug dafür.

Für die Ermittlung der Füllmasse eines kryogen gespeicherten Gases in einem Behälter zu Anzeige-, Kontroll- und Regelzwecken können verschiedene Messmethoden zum Einsatz kommen, die jedoch im Hinblick auf ihr Einsatzgebiet und ihre Genauigkeit zum Teil stark eingeschränkt sind. Neben anderen Messmethoden basiert zum Beispiel eine auf der Ermittlung der Druckdifferenz zwischen dem Bodenbereich und dem Kopfbereich eines Behälters. Die Genauigkeit dieser Methode ist jedoch oftmals nicht hinreichend, da beispielsweise eine starke Temperaturabhängigkeit der Messwerte besteht. In Behältern, in denen Umgebungsdruck herrscht, besteht die Möglichkeit, den Füllstand durch einen Temperatursensor im Innern des Behälters zu ermitteln, da der flüssige Anteil eines Mediums, das sich zu einem Teil in der flüssigen Phase und zu einem Teil in der gasförmigen Phase befindet und unter Umgebungsdruck steht, immer kälter ist als die Gasphase. Bei Behältern, die siedende Flüssigkeit enthalten, wird der Phasenzustand an der Meßstelle daran erkannt, ob der Temperatursensor an der Meßstelle eine Temperatur grösser oder kleiner der Siedetemperatur des Mediums anzeigt. In einem mit einer siedenden Flüssigkeit befüllten Behälter, der unter einem Druck größer als der Umgebungsdruck steht, kann diese Methode nicht eingesetzt werden, da sich die Siedetemperatur mit dem Druck ändert und mit Füllstandsschwankungen auch Druckschwankungen auftreten. Außerdem stellt sich in einem derartig befüllten Behälter mit der Zeit ein Gleichgewichtszustand zwischen der flüssigen und der gasförmigen Phase ein. Bei Behältern, deren Inhalt unter einem höheren Druck steht, als der Umgebungsdruck, können dagegen kapazitive Messmethoden eingesetzt werden. Weist der Behälter jedoch einen hohen Druck und tiefe Temperaturen auf, stößt diese Methode auf Schwierigkeiten, da sich die erhältlichen Sensoren nicht für tiefe Temperaturen eignen und in diesem Bereich nicht eingesetzt werden können. Darüber hinaus treten bei kapazitiven Messungen große Fehler auf, wenn der kalte Sensor in den Gasraum eintritt und Kondensation an der Oberfläche des Sensors stattfindet.

Infolge Wärmeeintrags in ein isoliertes kryogenes Tanksystem bildet sich eine thermisch bedingte Schichtung des gespeicherten Mediums aus, zum Beispiel Wasserstoff für einen Kraftfahrzeugantrieb, bei der sich warmes Gas im oberen und kaltes Gas im unteren Bereich des Behältnisses sammelt. Für die Füllstandsbestimmung eines solchen Tanks oder Behälters ist es auch möglich, die für die Berechnung der Dichte repräsentative Temperatur des Mediums zu bestimmen. Dies ist nur durch die Messung der Medientemperatur an mehreren repräsentativen Messtellen innerhalb des Tanks oder außerhalb des Tanks möglich.

So beschreibt das Deutsche Gebrauchsmuster 296 15 453, für eine Füllstandsanzeige, in einem Behälter eine Sensorkette aus Widerstandsthermometern und einem Referenzsensor anzuordnen. Der Referenzsensor befindet sich in der Flüssigkeit und mittels der Sensorkette wird festgestellt, welcher Sensor sich nicht mehr in der Flüssigkeit befindet, was auf den Stand des Flüssigkeitsspeigels der Befüllung schließen lässt.

Dazu sind mehrere Temperatursensoren erforderlich, was die Kosten, Komplexität und Fehleranfälligkeit erhöht. Die Position der Messtellen muss aufwändig ermittelt werden und über die Lebensdauer gewährleistet sein. Außerdem ist es sehr aufwändig, im Behälter defekte Sensoren auszutauschen.

US2005/0247123 A1 beschreibt ein Verfahren und eine Vorrichtung zur Ermittlung einer Füllmasse in einem Behälter, deren Wert aus einer Druckmessung und einer Temperaturmessung errechnet wird, gemäß dem Stand der Technik.

Der Erfindung liegt die Aufgabe zugrunde, ein Verfahren und eine Vorrichtung zur Ermittlung der Füllmasse eines kryogen gespeicherten Gases in einem Behälter zur Verfügung zu stellen, die bei einfachem Aufbau ausreichend genaue Ergebnisse liefern und oben genannte Nachteile vermeiden. Vorteilhafte Aus- und Weiterbildungen sind Inhalt der abhängigen Aansprüche.

Die Erfindung sieht ein Verfahren zur Ermittlung einer Füllmasse in einem wärmeisolierten Behälter für ein kryogen gespeichertes Gas vor, wobei die Füllmasse über ein bekanntes Behältervolumen und eine errechnete Dichte des Gasinhalts des Behälters bestimmt wird, deren Wert aus einer Behälterdruckrmessung und einer Temperaturmessung errechnet wird. Das Verfahren ist dadurch gekennzeichnet, dass ein Temperatursensor eingesetzt wird zur Messung einer Mischtemperatur einer flüssigen und einer gasförmigen Phase des Gases, die flüssige Phase entnommen über eine erste Entnahmeleitung an der geodätisch niedrigsten und die gasförmige Phase entnommen über eine zweite Entnahmeleitung an der geodätisch höchsten Stelle des Behälterhohlraums, wobei der Temperatursensor stromabwärts der Entnahmestellen, nach einer Zusammenführung der ersten und der zweiten Entnahmeleitung, zu einer einzigen, aus dem Behälter herausführenden Entnahmeleitung, in oder außen an dieser, dort platziert ist, wo eine vollständige Durchmischung der flüssigen und der gasförmigen Phase des Gases aus der ersten und zweiten Entnahmeleitung bereits erfolgt ist.

Dieses Verfahren wird vorteilhafterweise mit einer Vorrichtung zur Ermittlung der Füllmasse in einem wärmeisolierten Behälter, der ein Medium enthält, das sich zu einem Teil in der flüssigen Phase und zu einem anderen Teil in der gasförmigen Phase befindet durchgeführt, die dadurch gekennzeichnet ist, dass der Behälter mit einem Druckmesser und mit einem Temperatursensor ausgestattet ist, der eine Mischtemperatur der flüssigen und der gasförmigen Phase des Gases misst, wozu die flüssige Phase über eine erste Entnahmeleitung an der geodätisch niedrigsten und die gasförmige Phase über eine zweite Entnahmeleitung an der geodätisch höchsten Stelle des Behälterhohlraums entnommen wird und der Temperatursensor stromabwärts der Entnahmestellen, nach einer Zusammenführung der ersten und der zweiten Entnahmeleitung, zu einer einzigen, aus dem Behälter herausführenden Entnahmeleitung, in oder außen an dieser, dort platziert ist, wo eine vollständige Durchmischung der flüssigen und der gasförmigen Phase des Gases aus der ersten und zweiten Entnahmeleitung bereits erfolgt ist.

Das hat den Vorteil, dass der Temperatursensor, der stromab der Entnahmestellen in der Entnahmeleitungszusammenführung positioniert ist, die Mischtemperatur und somit die für die Füllstandsbestimmung repräsentative gemittelte Medientemperaturnur misst. Durch die Entnahme des Mediums mit maximaler und minimaler Temperatur ist unter der Annahme einer linearen Temperaturschichtung über die Behälterhöhe eine sehr genaue Bestimmung der Medientemperatur möglich, da gewährleistet ist, dass sowohl das kälteste als auch das wärmste im Tank vorkommende Gas zu gleichen Teilen entnommen wird. Es wird nur ein Sensor benötigt, der zusätzlich so angeordnet werden kann, dass er im Schadensfall einfach gewechselt werden kann. Über eine einfache Messreihe kann dieser so kalibiriert werden, dass eventuelle Einflüsse aus seiner Positionierung längs der Entnahmeleitung eliminiert werden können.

Deshalb ist ein bevorzugtes Verfahren dadurch gekennzeichnet, dass hinterlegte Kalibrier- oder Korrekturwerte oder Kalibrier- oder Korrekturfunktionen dazu verwendet werden, wenigstens die Position des Temperatursensors bei der Ermittlung der Füllmasse zu berücksichtigen.

Ein weiteres bevorzugtes Verfahren sieht vor, dass die Füllmasse des Behälters auf Wunsch, oder in Zeitabständen automatisch wiederholt, ermittelt wird.

Dies ist vorteilhaft zur regelmäßigen Erneuerung der Anzeige, wenn ein Behälter als Speicher zur Aufnahme des kryogenen Gases als Betriebsmittel eines Antriebsaggregats eines Kraftfahrzeugs verwendet wird und wärmeisoliert in einem Außenbehälter gehalten wird, der im Kraftfahrzeug untergebracht ist und wenn das Kraftfahrzeug in seinem Innenraum eine Anzeigeeinrichtung besitzt, die einem Fahrer des Kraftfahrzeugs die zuletzt berechnete Füllmasse wenigstens im Vergleich zu einer maximalen und einer minimalen Füllmasse darstellt.

Vorteilhafte Vorrichtungen zur Durchführung des Verfahrens zeichnen sich dadurch aus, dass die Verbindungsstelle der beiden Entnahmeleitungen oder die einzige Entnahmeleitung so ausgeführt ist, dass eine vollständige Durchmischung der flüssigen und der gasförmigen Phase des Gases aus der ersten und zweiten Entnahmeleitung stattfindet. Wenn sich der Temperatursensor außerhalb des Behälters befindet, ist eine noch einfachere Wartung möglich.

Zur Berechnung der Füllmasse ist es vorteilhaft, wenn die Vorrichtung eine Steuereinrichtung mit einer Recheneinrichtung aufweist, die die Füllmasse des Behälters auf Wunsch, oder in Zeitabständen automatisch wiederholt, ermittelt. Dabei können in der Recheneinrichtung gespeicherte Kalibrier- oder Korrekturwerte oder Kalibrier- oder Korrekturfunktionen dazu verwendet werden, wenigstens die Position des Temperatursensors bei der Ermittlung der Füllmasse zu berücksichtigen.

Ein bevorzugtes Ausführungsbeispiel der Erfindung beschreibt die nachfolgende Beschreibung mit der zugehörigen Zeichnung.

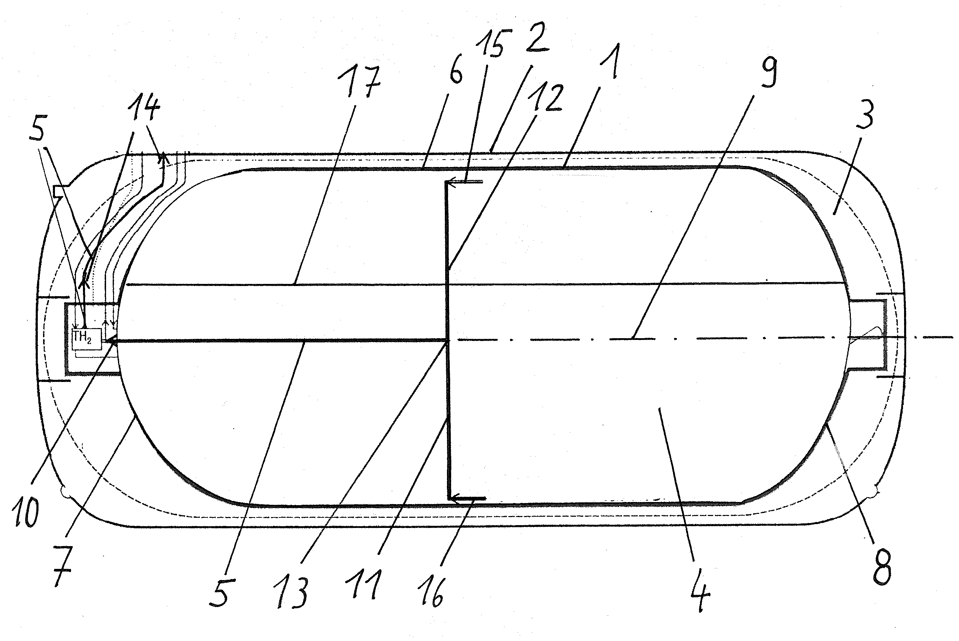

Die einzige Figur zeigt schematisch einen Schnitt durch einen Behälter für kryogen gespeichertes Gas mit einer erfindungsgemäßen Vorrichtung zur Anwendung eines erfindungsgemäßen Verfahrens zur Ermittlung der Füllmasse des kryogen gespeicherten Gases in dem als Kraftfahrzeugtank verwendbaren Behälter.

Wie in der Figur dargestellt, besteht ein in einem nicht gezeichneten Kraftfahrzeug als Tank für ein kryogen gespeichertes Gas 4 verwendbarer Kryotank aus zwei ineinander liegenden Behältern, einem Innenbehälter 1 und einem Außenbehälter 2. Der Außenbehälter 2 ist vorzugsweise aus einer Edelstahl- oder einer Aluminiumlegierung gefertigt. Der Innenbehälter 1 kann innen aus einem metallischen Liner bestehen, der mit Faserverbundwerkstoff umwickelt ist. Der Raum 3 zwischen den Behältern 1, 2 ist evakuiert und der Innenbehälter 1 im Außenbehälter 2 gelagert. Ein kryogen gespeichertes Gas, wie zum Beispiel Wasserstoff, auch als Medium 4 bezeichnet, wird unter Druck im Innenbehälter 1 gelagert und ist gegenüber der Umwelt durch das Vakuum im Raum 3 thermisch isoliert.

Das Medium 4 wird mit einer einzigen, aus dem Behälter herausführenden, Entnahmeleitung 5 entnommen, die in dem, aus einem liegenden Zylinder 6 und aus jeweils einem auf jeder Seite daran kugelig angeformten Abschlussdeckel 7, 8 bestehenden, Innenbehälter 1 geradlinig entlang einer Zylindermittenachse 9 verläuft und diesen auch durch ihr Zenit im kugeligen Abschlussdeckel 7 verlässt. (angedeutet gezeichnet durch einen Pfeil 10). Am behälterinnenseitigen Ende der einzigen Entnahmeleitung 5 verzweigt diese in eine vertikal verlaufende erste Entnahmezuleitung 11 zur geodätisch niedrigsten Stelle des Behälterhohlraums und eine vertikal verlaufende zweite Entnahmezuleitung 12 zur geodätisch höchsten Stelle des Behälterhohlraums, wobei durch die erste Entnahmezuleitung 11 eine flüssige Phase und durch die zweite Entnahmezuleitung 12 eine gasförmige Phase des Mediums 4 entnommen wird. Zeichnerisch dargestellt ist die Entnahme der gasförmigen Phase im oberen Bereich des Innenbehälters 1 durch einen Pfeil 15 und die Entnahme der flüssigen Phase im unteren Bereich des Innenbehälters 1 durch einen Pfeil 16. Beide Phasen sind getrennt dargestellt durch eine einen Flüssigkeitsspiegel andeutende Linie 17. Eine Verbindungsstelle 13 der ersten und zweiten Entnahmezuleitung 11, 12 mit der einzigen Entnahmeleitung 5 ist so ausgeführt, dass dort eine vollständige Durchmischung der flüssigen und der gasförmigen Phase des Mediums oder auch kryogen gespeicherten Gases 4 aus der ersten und zweiten Entnahmezuleitung 11, 12 stattfindet. Alternativ dazu kann die einzige Entnahmeleitung 5 im Innenbehälter 1auch einfach nur lang genug ausgebildet sein.

Zum ermitteln der Masse des kryogen gespeicherten Gases 4 im Innenbehälter 1, befindet sich in diesem ein nicht gezeichneter Druckmesser.
Ein Temperatursensor TH2 ist im Zwischenraum 3, zwischen Innen- 1 und Außenbehälter 2 an der einzigen Entnahmeleitung 5 untergebracht. Zeichnersch dargestellt ist dies durch die durch den Temperatursensor TH2 unterbrochene einzige Entnahmeleitung 5 mit Pfeilen 14, die eine Entnahmerichtung des Mediums 4 symbolisch angedeutet darstellen. Dabei kann der Temperatursensor TH2 innerhalb oder außen an der Entnahmeleitung 5 angebracht sein.

Der Temperatursensor TH2 misst eine Mischtemperatur der flüssigen und der gasförmigen Phase des Mediums 4, wozu die flüssige Phase über die erste Entnahmezuleitung 11 an der geodätisch niedrigsten (angedeutet gezeichnet durch Pfeil 16) und die gasförmige Phase über die zweite Entnahmezuleitung 12 an der geodätisch höchsten Stelle (angedeutet gezeichnet durch Pfeil 15) des Hohlraums des Innenbehälters 1 entnommen wird. Dazu ist der Temperatursensor TH2 stromabwärts der Entnahmestellen 15, 16, nach der Zusammenführung über die Verbindungsstelle 13 der ersten und der zweiten Entnahmezuleitung 11, 12, zu der einzigen, aus dem Innenbehälter 1 herausführenden Entnahmeleitung 5, in oder außen an dieser, dort platziert, wo die vollständige Durchmischung der flüssigen und der gasförmigen Phase des Mediums 4 aus der ersten und zweiten Entnahmezuleitung 11, 12 bereits erfolgt ist.

Um aus dieser Mischtemperatur des kryogen gespeicherten Gases 4 dessen Füllmasse in dem wärmeisolierten Innenbehälter 1 zu ermitteln, wird durch eine Verfahrensroutine mit Hilfe des bekannten Innenbehältervolumens und einer errechneten Dichte, der Gasinhalt des Innenbehälters 1 bestimmt. Die Dichte errechnet sich aus dem Behälterdruck, der durch den Drucksensor gemessen wird und der Mischtemperatur des Gases 4. Dazu ist eine Steuereinrichtung mit einer Recheneinrichtung notwendig, in der die Verfahrensroutine abgearbeitet wird und die die Füllmasse des Innenbehälters 1 auf Wunsch, oder in Zeitabständen automatisch wiederholt, ermitteln kann. Damit das Ergebnis der Rechenroutine jederzeit dem wahren Behälterinhalt entspricht, ist jeder Kryotank nach seiner Herstellung zu kalibrieren. Das dient dazu, in der Recheneinrichtung Kalibrier- oder Korrekturwerte oder Kalibrier- oder Korrekturfunktionen zu hinterlegen, mit Hilfe derer zum Beispiel die Position des Temperatursensors (TH2) bei der Ermittlung der Füllmasse berücksichtigt werden kann.

Der Innenbehälter 1 kann zum Beispiel als Speicher zur Aufnahme des kryogenen Gases 4 als Betriebsmittel eines Antriebsaggregats eines Kraftfahrzeugs verwendet werden und wärmeisoliert in dem Außenbehälter 2 gehalten sein, der wiederum im Kraftfahrzeug untergebracht ist, welches in seinem Innenraum eine Anzeigeeinrichtung besitzt, die einem Fahrer des Kraftfahrzeugs die zuletzt aufgrund eines Befehls aus der Steuereinrichtung durch die Recheneinrichtung berechnete Füllmasse wenigstens im Vergleich zu einer maximalen und einer minimalen Füllmasse darstellt.

## Patentansprüche

1. Verfahren zur Ermittlung einer Füllmasse in einem wärmeisolierten Behälter für ein kryogen gespeichertes Gas (4), wobei die Füllmasse über ein bekanntes Behältervolumen und eine errechnete Dichte des Gasinhalts des Behälters bestimmt wird, deren Wert aus einer Behälterdruckrmessung und einer Temperaturmessung errechnet wird, **dadurch gekennzeichnet, dass** ein Temperatursensor (TH2) eingesetzt ist zur Messung einer Mischtemperatur einer flüssigen und einer gasförmigen Phase des Gases, die flüssige Phase entnommen über eine erste Entnahmezuleitung (11) an der geodätisch niedrigsten und die gasförmige Phase entnommen über eine zweite Entnahmezuleitung (12) an der geodätisch höchsten Stelle des Behälterhohlraums, wobei der Temperatursensor (TH2) stromabwärts der Entnahmestellen, nach einer Zusammenführung der ersten und der zweiten Entnahmezuleitung (11, 12), zu einer einzigen, aus dem Behälter herausführenden Entnahmeleitung (5), in oder außen an dieser, dort platziert ist, wo eine vollständige Durchmischung der flüssigen und der gasförmigen Phase des Gases aus der ersten und zweiten Entnahmezuleitung (11, 12) bereits erfolgt ist.

2. Verfahren nach Anspruch 1, **dadurch gekennzeichnet, dass** hinterlegte Kalibrier- oder Korrekturwerte oder Kalibrier- oder Korrekturfunktionen dazu verwendet werden, wenigstens die Position des Temperatursensors (TH2) bei der Ermittlung der Füllmasse zu berücksichtigen.

3. Verfahren nach Anspruch 1 oder 2, **dadurch gekennzeichnet, dass** die Füllmasse des Behälters auf Wunsch, oder in Zeitabständen automatisch wiederholt, ermittelt wird.

4. Vorrichtung zur Ermittlung der Füllmasse in einem wärmeisolierten Behälter, der ein Medium (4) enthält, das sich zu einem Teil in der flüssigen Phase und zu einem anderen Teil in der gasförmigen Phase befindet, wobei der Behälter mit einem Druckmesser und mit einem Temperatursensor (TH2) ausgestattet ist, **dadurch gekennzeichnet, dass** der Temperatursensor eine Mischtemperatur der flüssigen und der gasförmigen Phase des Gases misst, wozu die flüssige Phase über eine erste Entnahmezuleitung (11) an der geodätisch niedrigsten und die gasförmige Phase über eine zweite Entnahmezuleitung (12) an der geodätisch höchsten Stelle des Behälterhohlraums entnommen wird und der Temperatursensor (TH2) stromabwärts der Entnahmestellen, nach einer Zusammenführung der ersten und der zweiten Entnahmezuleitung (11, 12), zu einer einzigen, aus dem Behälter herausführenden Entnahmeleitung (5), in oder außen an dieser, dort platziert ist, wo eine vollständige Durchmischung der flüssigen und der gasförmigen Phase des Gases aus der ersten und zweiten Entnahmezuleitung (11, 12) bereits erfolgt ist.

5. Vorrichtung nach Anspruch 4, **dadurch gekennzeichnet, dass** die Verbindungsstelle (13) der beiden Entnahmezuleitungen (11, 12) oder die einzige Entnahmeleitung (5) so ausgeführt ist, dass eine vollständige Durchmischung der flüssigen und der gasförmigen Phase des Gases aus der ersten und zweiten Entnahmezuleitung (11, 12) stattfindet.

6. Vorrichtung nach einem der Ansprüche 4 oder 5, **dadurch gekennzeichnet, dass** sich der Temperatursensor (TH2) außerhalb des Behälters befindet.

7. Vorrichtung nach einem der Ansprüche 4 bis 5, **dadurch gekennzeichnet, dass** diese eine Steuereinrichtung mit einer Recheneinrichtung aufweist, die die Füllmasse des Behälters auf Wunsch, oder in Zeitabständen automatisch wiederholt, ermittelt.

8. Vorrichtung nach Anspruch 7, **dadurch gekennzeichnet, dass** in der Recheneinrichtung gespeicherte Kalibrier- oder Korrekturwerte oder Kalibrier- oder Korrekturfunktionen dazu verwendet werden, wenigstens die Position des Temperatursensors (TH2) bei der Ermittlung der Füllmasse zu berücksichtigen.

9. Behälter mit einer Vorrichtung nach einem der Ansprüche 4 bis 8 zur Anwendung eines Verfahrens nach einem der Ansprüche 1 bis 3, **dadurch gekennzeichnet, dass** dieser als Speicher zur Aufnahme des kryogenen Gases (4) als Betriebsmittel eines Antriebsaggregats eines Kraftfahrzeugs verwendet wird und wärmeisoliert in einem Außenbehälter (2) gehalten wird, der im Kraftfahrzeug untergebracht ist und dass das Kraftfahrzeug in seinem Innenraum eine Anzeigeeinrichtung besitzt, die einem Fahrer des Kraftfahrzeugs die zuletzt berechnete Füllmasse wenigstens im Vergleich zu einer maximalen und einer minimalen Füllmasse darstellt.

## Claims

1. A method for determining a filling mass in a thermally insulated container for a cryogenically stored gas (4), wherein the filling mass is determined via a known container volume and a calculated density of the gas content of the container, the value of which is calculated from a container pressure measurement and from a temperature measurement, **characterised in that** a temperature sensor (TH2) is used to measure a mixed temperature of a liquid and a gaseous phase of the gas, the liquid phase is extracted via a first extraction supply line (11) at the geodetically lowest point and the gaseous phase is extracted via a second extraction supply line (12) at the geodetically highest point of the container cavity, wherein the temperature sensor (TH2) is positioned downstream of the extraction points after a convergence of the first and second extraction supply lines (11, 12) to a single extraction line (5), leading out of the container, on the inside or outside of said line, at a location where the liquid and gaseous phases of the gas from the first and second extraction supply lines (11, 12) have already been completely and thoroughly mixed.

2. A method according to claim 1, **characterised in that** stored calibration or correction values or calibration or correction functions are used to consider at least the position of the temperature sensor (TH2) in the determination of the filling mass.

3. A method according to claim 1 or claim 2, characterised in-that the filling mass of the container is determined as desired or automatically repeatedly within time intervals.

4. A device for determining the filling mass in a thermally insulated container which contains a medium (4) which is partly in the liquid phase and partly in the gaseous phase, wherein the container is fitted with a pressure gage and with a temperature sensor (TH2), **characterised in that** the temperature sensor measures a mixed temperature of the liquid and gaseous phase of the gas, for which purpose the liquid phase is extracted via a first extraction supply line (11) at the geodetically lowest point and the gaseous phase is extracted via a second extraction supply line (12) at the geodetically highest point of the container cavity, and the temperature sensor (TH2) is positioned downstream of the extraction points after a convergence of the first and second extraction supply lines (11, 12) to a single extraction line (5), leading out of the container, on the inside or outside of said line, at a location where the liquid and gaseous phases of the gas from the first and second extraction supply lines (11, 12) have already been completely and thoroughly mixed.

5. A device according to claim 4, **characterised in that** the junction (13) of the two extraction supply lines (11, 12) or the single extraction line (5) is configured so that the liquid phase and the gaseous phase of the gas from the first and second extraction supply lines (11, 12) are completely and thoroughly mixed.

6. A device according to any of claims 4 or 5, **characterised in that** the temperature sensor (TH2) is located outside the container.

7. A device according to any of claims 4 to 5, **characterised in that** said device has a control means with a computing means which determines the filling mass of the container as desired or automatically repeatedly within time intervals.

8. A device according to claim 7, **characterised in that** calibration or correction values or calibration or correction functions which are stored in the computing means are used to consider at least the position of the temperature sensor (TH2) in the determination of the filling mass.

9. A container having a device according to any of claims 4 to 8 for the use of a method according to any of claims 1 to 3, **characterised in that** said container is used as a storage means for receiving the cryogenic gas (4) as the operating medium of a drive unit of a motor vehicle and is kept thermally insulated in an outer container (2) which is accommodated in the motor vehicle, and **in that** the motor vehicle has in its interior an indicating device which indicates to a driver of the motor vehicle the last calculated filling mass at least compared to a maximum filling mass and to a minimum filling mass.

## Revendications

1. Procédé permettant de détecter la masse de remplissage d'un réservoir thermiquement isolé d'un gaz (4) stocké de façon cryogénique, la masse de remplissage étant déterminée à partir du volume connu du réservoir et de la densité calculée du contenu gazeux réservoir, dont la valeur est calculée à partir d'une mesure de la pression dans le réservoir et d'une mesure de température,
**caractérisé en ce qu'**
on utilise un capteur de température (TH2) pour mesurer la température de mélange d'une phase liquide et d'une phase vapeur du gaz, la phase liquide étant prélevée par une première conduite de prélèvement (11) au niveau du point géodésiquement le plus bas de la cavité interne du réservoir et la phase gazeuse étant prélevée par une seconde conduite de prélèvement (12) au niveau du point géodésiquement le plus haut de la cavité interne du réservoir, le capteur de température (TH2) étant positionné en aval des points de prélèvement, après le rassemblement de la première et de la seconde conduites de prélèvement (11, 12) en une seule conduite de prélèvement (5) conduisant à la partie externe du réservoir, dans ou à l'extérieur de celui-ci, là où un mélange total de la phase liquide et de la phase gazeuse du gaz sortant de la première et de la seconde conduites de prélèvement (11, 12) a déjà eu lieu.

2. Procédé conforme à la revendication 1,
**caractérisé en ce que**
l'on utilise des valeurs de calibrage ou de correction enregistrées ou des fonctions de calibrage ou de correction pour tenir compte d'au moins la position du capteur de température (TH2) lors de la détection de la masse de remplissage.

3. Procédé conforme à la revendication 1 ou 2,
**caractérisé en ce que**
la masse de remplissage du réceptacle est déterminée à la demande ou de façon répétitive automatique selon des intervalles de temps.

4. Dispositif permettant de déterminer la masse de remplissage d'un réservoir thermiquement isolé qui renferme un fluide (4) qui se trouve pour une partie en phase liquide et pour une autre partie en phase gazeuse, dans lequel le réservoir est équipé d'un manomètre et d'un capteur de température (TH2),
**caractérisé en ce que**
le capteur de température mesure la température de mélange de la phase liquide et de la phase gazeuse du gaz, et dans ce but, la phase liquide est prélevée par une première conduite de prélèvement (11) au point géodésiquement le plus bas de la cavité interne du réservoir, et la phase gazeuse est prélevée par une seconde conduite de prélèvement (12), au point géodésiquement le plus haut de la cavité interne du réservoir, et le capteur de température (TH2) est positionné en aval des points de prélèvement après le rassemblement de la première et de la seconde conduites de prélèvement (11, 12) en une seule conduite de prélèvement (5) conduisant à la partie externe du réservoir, dans ou à l'extérieur de celui-ci, là où un mélange total de la phase liquide et de la phase gazeuse du gaz sortant de la première et de la seconde conduites de prélèvement (11, 12) a déjà eu lieu.

5. Dispositif conforme à la revendication 4,
**caractérisé en ce que**
le point de jonction (13) des deux conduites de prélèvement (11, 12) ou la conduite de prélèvement unique (5) est réalisé de sorte qu'il se produise un mélange total de la phase liquide et de la phase gazeuse du gaz sortant de la première et la seconde conduites de prélèvement (11, 12).

6. Dispositif conforme à l'une des revendications 4 et 5,
**caractérisé en ce que**
le capteur de température (TH2) est situé à l'extérieur du réceptacle.

7. Dispositif conforme à l'une des revendications 4 et 5,
**caractérisé en ce qu'**
il comporte un dispositif de commande équipé d'un dispositif de calcul qui détecte la masse de remplissage du réservoir à la demande, ou de façon automatiquement répétitive selon des intervalles de temps.

8. Dispositif conforme à la revendication 7,
**caractérisé en ce que**
des valeurs de calibrage ou des valeurs de correction enregistrées dans le dispositif de calcul ou des fonctions de calibrage ou de correction sont utilisées pour tenir compte d'au moins la position du capteur de température (TH2) lors de la détection de la masse de remplissage.

9. Réservoir comprenant un dispositif conforme à l'une des revendications 4 à 8, permettant la mise en oeuvre du procédé conforme à l'une des revendications 1 à 3,
**caractérisé en ce qu'**
il est utilisé en tant qu'accumulateur pour la réception d'un gaz cryogénique (4), constituant un carburant d'un ensemble d'entraînement d'un véhicule et est maintenu en étant thermiquement isolé dans un réservoir externe (2) qui est inséré dans le véhicule, et le véhicule comporte dans son habitacle un dispositif d'affichage qui présente au conducteur du véhicule la masse de remplissage calculée la dernière au moins en comparaison avec une masse de remplissage maximum et une masse de remplissage minimum.
